# EUROPEAN PATENT SPECIFICATION

(11) **EP 2 323 764 B1**
(45) Date of publication and mention of the grant of the patent: **21.03.2012**
(21) Application number: 09784586.1
(22) Date of filing: 26.05.2009
(51) Int. Cl.: B01L 3/00, G01N 33/487, G01N 33/483, G01N 35/00, G01N 33/543

(54) **APPARATUS FOR EFFECTING CHEMICAL ASSAYS**
VORRICHTUNG ZUR DURCHFÜHRUNG VON CHEMISCHEN BESTIMMUNGEN
APPAREIL POUR RÉALISATION DES TESTS CHIMIQUES

(30) Priority: 10.07.2008 GB 0812681
(43) Date of publication of application: 25.05.2011
(73) Proprietor: THE SECRETARY OF STATE FOR INNOVATION, UNIVERSITIES AND SKILLS OF HER MAJESTY'S BRITANNIC GOVERNMENT, London SW1 0ET (GB)
(72) Inventor: PORTER, Robert, Andrew, Bedfordshire NN10 9LF (GB)
(74) Representative: Jehan, Robert
(86) International application number: PCT/GB2009/001310
(87) International publication number: WO 2010/004241

(56) References cited:
- EP-A- 1 611 836
- WO-A-00/13014
- WO-A-01/67079
- WO-A-90/02938
- WO-A-99/38612
- WO-A-2004/020112
- WO-A-2005/046437
- US-A- 5 863 502
- US-A1- 2007 148 039

## Description

The present invention relates to apparatus and methods for effecting chemical testing and in the preferred embodiments for conducting an electrochemical assay utilising metal nanoparticles as an electrochemical label.

Much work has been done towards the provision of a portable device for "point-of-care" medical testing. The majority of this work has been directed towards the development of a so-called "laboratory-on-a-chip". The purpose of such devices is to take a biological sample and then proceed to test it for the presence of various antigens.

US-2006/0263 818 discloses a system in which antigens, a sample and labelled polyclonal antibodies are successively flowed in a grid, the antigens and antibodies flowing in one direction, and the sample flowing perpendicularly to this. At each of the crossing points of the samples and antigens/antibodies, an indicative number of labelled antibodies amassed. The labels on these antibodies may be a fluorophore that generates a light signal, from which conventional fluoroscopic detection techniques can quantify the antigen. By providing a grid of 5 x 10 paths, the device is able simultaneously to run five tests on ten samples.

Prior art devices seeking to provide a "laboratory on a chip" aim to be complete integral units which carry out specific chemical or biochemical assays and which generate and display the analysis results of the assays, all in a manner which is self-contained and substantially foolproof. There is thus no need with these devices to have any other equipment and little control by the user.

However, devices of this nature can be expensive to produce and their performance is often dictated by their size, nature and cost pressures. In addition, in order to make such devices more generally useful, they tend to provide for the testing of a variety of conditions. One device, for example, exposes a specimen to five tests, of which one or more may be unnecessary. Furthermore, these devices are not readily adaptable to different tests. For example, if a new antigen is discovered it is necessary to provide a new device specifically designed and prepared for testing this.

US 2004/0248093 discloses the use of a magneto-optical bio-disc for performing optical assays. Other documents that disclose the use of discs for testing include WO 2006/118420, WO 98/28623, US 6,319,469 and US 2002/0137218. Disadvantages of discs include that the operation is not always intuitive and the moving parts can often require a flat and stable surface.

Other documents that do not include discs are WO 2008/074146 and WO 98/53301. However, these documents have not been able to provide the same preparation and analysis functions while maintaining the components in relative isolation.

The present invention seeks to provide improved apparatus and methods for effecting chemical and biochemical analysis.

According to an aspect of the present invention, there is provided a test device for testing for one or more characteristics of a sample carried by a sample carrier, including a holder designed to hold the sample carrier substantially immovably in a predetermined relative position; a control unit; a movement unit operable to effect movement of a sample to be tested within the sample carrier; a sensing unit operable to sense one or more parameters relating to the contents or characteristics of the sample; diagnostic means operable to determine a diagnostic condition on the basis of the sensed parameter or parameters; and an information unit operable to provide information relating to the diagnosis; wherein the movement unit and the sensing unit include non-contact movement and sensing means respectively for moving a sample and for sensing said one or more parameters without contact with the sample; the device being arranged so that in use there is no relative movement of the device and the sample carrier.

In the preferred embodiment, the movement means is operable to generate an electromagnetic or electrical field for moving a sample to be tested.

Advantageously, the sensing means is operable to sense electrical characteristics pertaining to a sample to be tested.

In other embodiments, the sensing means is operable to sense optical, magnetic, resonance, plasmodic, and/or acoustic characteristics of a sample to be tested.

The test device provides a unit which is operable for effecting a test on a sample including manipulating the sample to extract components therefore for testing. It is preferred that the testing device is a hand held unit operable to carry out one or a few tests on a sample and thereby to generate a diagnostic result quickly, preferably in no more than a few minutes. This allows the device to be used in a variety of applications and to give results in situ, for example at a doctor's surgery, in an ambulance and so on.

The lack of contact between the movement unit and the sample means that the device itself does not become contaminated and therefore does not need to be sterilised between uses or disposed of after use. The holding of the sample carrier substantially immovably within the test device provides for a simple device without moving parts which can be operated easily and intuitively by a healthcare worker for example at the scene of an accident and enables a portable and robust device to be manufactured.

Advantageously, the sensing means includes at least one terminal operable to interact with at least one associated terminal of the sample carrier, thereby to be able to sense without contact with the sample.

Preferably, the test device includes an identification detection unit operable to detect an identifier of the sample carrier. In this way, the test device can carry out a diagnosis on the specific characteristic sensed by means of the sample carrier, it not being necessary for an operator either to find this out, with possible errors being made, or for the test device to determine this separately.

Advantageously, the test device includes retrieval means operable to retrieve sample and/or test data associated with the sample carrier. In an embodiment, the retrieval means is operable to retrieve data located on a device on the sample carrier. In this way, the test device need not be preloaded with data relating to the test to be carried out and can thus be useful in carrying out new tests or tests for new characteristics of the sample, such as new viruses, without requiring reprogramming, servicing or other data input.

In an embodiment, the test device includes a communication unit operable to transmit and/or receive data relating to a sample test. The test device may, for example, communicate the results of its diagnosis directly to a hospital or other assessment centre.

The test device is preferably updatable.

According to another aspect of the present invention, there is provided a test device for testing for one or more characteristics of a sample carried by a sample carrier, which test device is in the form of an attachment device attachable to a portable electronic processing device; the attachment device including a holder designed to hold the sample carrier substantially immovably in a predetermined relative position; a movement unit operable to effect movement of a sample to be tested within the sample carrier; a sensing unit operable to sense one or more parameters relating to the contents or characteristics of the sample; and an interface unit to a control unit of an electronic processing device for use in determining a diagnostic condition on the basis of the sensed parameter or parameters and for providing information relating to the diagnosis; wherein the movement unit and the sensing unit include non- contact movement and sensing means respectively for moving a sample and for sensing said one or more parameters without contact with the sample; the device being arranged so that in use there is no relative movement of the device and the sample carrier.

Preferably, the attachment device is in the form of a cradle.

There are circumstances where, for example, medical staff already have electronic data and/or communication devices. This aspect allows the test device to be formed in conjunction with those electronic devices, thus providing familiar functionality and features to the medical personnel as well as interfacing with the electronic device, such as to link newly diagnosed conditions to existing patient records.

According to another aspect of the present invention, there is provided a combination of a test device and a sample carrier, the test device being operable to test for one or more characteristics of a sample carried by the sample carrier; the combination including: a holder designed to hold the sample carrier substantially immovably in a predetermined relative position; a control unit; a movement unit operable to effect movement of a sample to be tested within the sample carrier; a sensing unit operable to sense one or more parameters relating to the contents or characteristics of the sample; diagnostic means operable to determine a diagnostic condition on the basis of the sensed parameter or parameters and an information unit operable to provide information relating to the diagnosis; wherein the movement unit and the sensing unit include non- contact movement and sensing means respectively for moving a sample and for sensing said one or more parameters without contact with the sample; the device being arranged so that in use there is no relative movement of the device and the sample carrier.

The teachings herein are also directed to a sample carrier formed as a single use device for use in testing for the presence of a substance, including: a sample support element, a mixing zone and a detection zone within or on the sample support element, a coupling channel between the mixing and detection zones operable to provide for the transfer of reagents between the mixing and detection zones, and a substance inlet within or on the sample support element coupled to the channel between the first and second chambers.

Embodiments of the present invention are described below, by way of example only, with reference to the accompanying drawings, in which:
Figure 1 is a schematic diagram of the various elements used in an embodiment of test method, including a magnetic particle to which antibodies are attached, a silver sol particle to which one or more antibodies are attached and an antigen;
Figure 2 is a schematic diagram showing the elements of Figure 1 bound together in a first stage of the analysis procedure;
Figure 3 is a schematic diagram of the first stage of the analysis procedure, termed an incubation stage;
Figure 4 is a schematic diagram of a separation stage of the analysis procedure;
Figure 5 shows a stage of the analysis procedure after dissolution of the silver sol particles;
Figure 6 is a perspective view of an embodiment of sample carrier in the form of a test strip or chip;
Figure 7 is an exploded view of a practical implementation of the test chip of Figure 6;
Figure 8 is a schematic diagram of a preferred embodiment of testing chambers for the strip or chip of Figures 6 and 7;
Figure 9 is a perspective view of a preferred embodiment of hand-held testing device;
Figure 10 is an exploded view of the testing device of Figure 9;
Figure 11 is a schematic diagram showing some of the components of the detector device as they would be arranged over the test chip of Figures 6 or 7;
Figure 12 is a schematic diagram in front elevation of the components of Figure 11;
Figures 13 to 22 are diagrams representative of one example of application of the devices of Figures 6 to 12;
Figure 23 is an exploded view of another embodiment of detector device;
Figure 24 is a perspective view of an embodiment of cradle detector device suitable for attachment to a hand-held computing device or other personal digital assistant;
Figure 25 is a perspective view of the device of Figure 24 showing the cradle separated from a personal digital assistant engageable therewith;
Figure 26 is an exploded view of the cradle of Figures 24 and 25 showing the major components thereof;
Figures 27 to 36 show an example of usage of the device of Figures 24 to 26;
Figure 37 is a schematic view of the chambers and conduit of a test chip 30 provided with another example of contents;
Figure 38 is schematic diagram of another embodiment of chamber arrangement for a test chip or strip; and
Figure 39 is schematic diagram of another embodiment of chamber arrangement for a test chip or strip.

It is to be understood that the Figures are provided for illustration purposes only and are not to scale. In many instances, the drawings show elements much larger that they would be in practice, as the skilled person will readily appreciate.

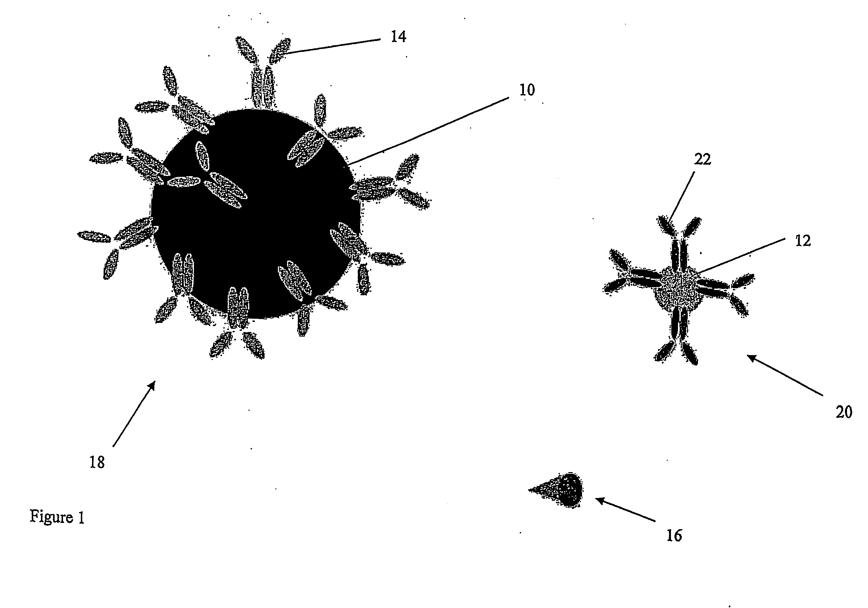

Figures 1 to 5 and the accompanying description below provide an example of a chemical analysis method suitable for being performed in the apparatus devices disclosed herein. Further details of this chemical assay are disclosed in the applicant's co-pending British patent application number 0723137.6.

The illustrated chemical analysis steps are just one of a variety of examples for which the apparatus disclosed herein could be adapted to work.

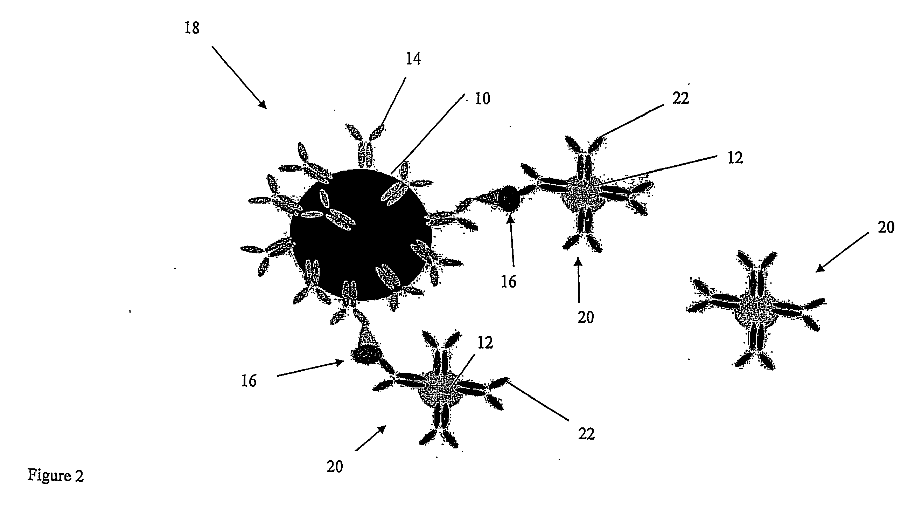

As shown in Figures 1 and 2, the method shown utilises a magnetic particle 10, preferably a super paramagnetic particle such as an arsenic solid phase, and a metal label, typically a particulate label which is preferably a silver sol 12. Silver is preferable as it forms stable sols which can easily be oxidised to form silver ions. The magnetic particle 10 is attached to a first binding moiety, preferably one or more antibodies 14, which is capable of binding to an analyte of interest. The analyte of interest is preferably an antigen 16 but can also be an antibody, a mimotype or nucleic acid strand. The magnetic particle 10 with its attached antibodies 14 forms a magnetic support 18.

The silver sol particle 12 is attached to a second binding moiety to form a metal label 20. The second binding moiety, preferably one or more antibodies 22, is capable of binding to a different region of the antigen 16.

In practice, a plurality of magnetic particles 10 and labels 12 is provided in solution or suspension, for reaction with a plurality of antigens 16 in a sample to be tested.

Referring next to Figure 2, the elements of Figure 1 are shown once they have become bound to one another, typically after an incubation period in a suitable reaction chamber, examples of which are described below. An antibody 14 of the magnetic particle 10 and an antibody 22 of the particulate label 12 bind to an antigen 16, in effect sandwiching the antigen 16 between them. A plurality of antigens 16 can be bound to each magnetic particle 10. The composition is such that only the right antigen 16, that is the antigen sought to be detected and measured, can bind to the antibodies 14 and 22 of the magnetic particle 10 and label 12. Any other antigens or other substances in the mix will not bind to the magnetic particle 10 and neither to the label 12.

The combination is such that the antigens 16 become attached to a carrier device, the magnetic particle, as well as to a label, in this example the silver sol particle 12. The antigens can thus be made to move and then to be detected, in particular by using the silver of the label 12, as described below.

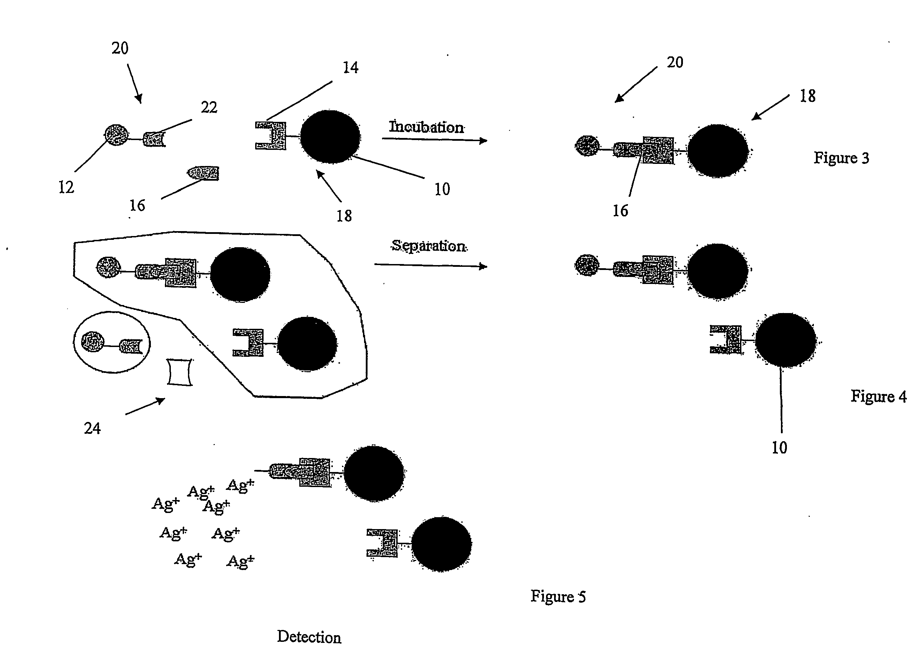

Referring now to Figures 3 to 5, these depict in graphical form the binding of the various elements together, the separation of the magnetic particles from the remainder of the solution or suspension and the detection of the labels carried by the antigens. For ease of description, the three stages shown are depicted as the incubation stage, the separation stage and the detection stage. The term incubation is not intended to imply any particular process apart from allowing the sample to mix with the carrier and label particles and to allow the element to be tested to be attached to these.

Figure 3 depicts the incubation stage, in which in a suitable mixing chamber and held in a suitable inert carrier fluid there are provided a plurality of magnetic particles 10, a plurality of labels 12 and then a specimen to be tested. In this example, the specimen includes a plurality of antigen particles 16. The antigen particle 16 is depicted as being of a particular type, shown as a particular shape in the drawing. The antibodies 14 and 22 of the particles 10 and 12 respectively are compatible only with that antigen 16 and are depicted as having complementary shapes. In this schematic representation, the magnetic particle 10 is shown having a single antibody particle 14 but in practice will be provided with a plurality of these.

Thus during this first phase the antigen 16 binds to the antibodies 14 and 22 to form the complex shown at the right hand side of the Figure. Any other antigens in the specimen will not bind either to the magnetic particle 10 or the label 12 and thus will remain isolated in suspension. These antigens could be said, following the representation in Figure 3, to have a different shape with which the antibodies 14 and 22 are not compatible.

Figure 4 shows the second phase in the procedure, that is the separation phase. The magnetic properties of the particles 10 are used to move these outside the mixing chamber to a second, detection chamber. Typically, this is achieved by the generation of a magnetic or electromagnetic force used to push or drag the magnetic particles 10 in the desired direction. Apparatus and methods for achieving this are described in detail below.

During separation, therefore, all or substantially all of the magnetic particles 10 are removed from the mixing chamber, including those to which no antigen 16 has bound. What is left in the mixing chamber is any antigens 24 incompatible with the antibodies 14, 22, that is not desired to be analysed, and labels 12 which have not bound to a magnetic particle 10 through an appropriate antigen 16.

Referring now to Figure 5, there is shown the final phase of the process, that is the detection phase. Once the magnetic particles 10 have reached the detection chamber, the silver sol is oxidised. This in effect dissolves the silver of the label and produces silver ions which dissolve into the carrier fluid. It will be appreciated that since only the correct antigens 16 will have been transported by the magnetic particle 10 and since only these will carry with them a label 12, the amount of silver ions produced by oxidation will be directly related to the number/amount of the antigens sought to be detected in the original specimen. Any magnetic particles 10 which are transported to the detection chamber but which do not carry any antigen 16 will not carry a label 12 either and thus will not affect amount of silver ion generated by oxidation.

In one embodiment, the detection chamber is provided with ammonium thiocyanate which removes the silver sol from its biocomplex and forms a monolayer chemically bound around the silver sol resulting in a negatively charged nanoparticle. This charged nanoparticle can be migrated under an electrical potential to a positively charged electrode. The silver sol at that electrode is then dissolved under an oxidative potential to form silver ions Ag⁺, which can then be measured by accumulation stripping voltammetry (ASV). ASV is an analytical technique that involves preconcentration of a metal phase onto an electrode surface and selective oxidization of each metal phase species during an anodic potential sweep.

A small proportion of the silver ions measured may be in the form of a complex with a chelating agent where the release agent is capable of chelating the silver ions.

The use of silver sol as a label 12 gives a molecular amplification of the electrochemical signal, as each 40 nm silver sol particle contains approximately 10⁶ silver ions. Thus the sensitivity of the assay is enhanced and only a small amount of sample is required. Furthermore, silver forms stable sols for use as a biolabel. It also easily oxidized to form silver ions.

Figures 1 to 5 and the above description relate to just one example of a suitable collection and detection procedure using a particular antibody/antigen mechanism, transport and labelling arrangement and oxidation method. However, the apparatus and methods described below are not limited to the application of this method alone and could be used with other detection mechanisms, that is with different analyte capturing and detecting mechanisms, as well as with other label detection methods.

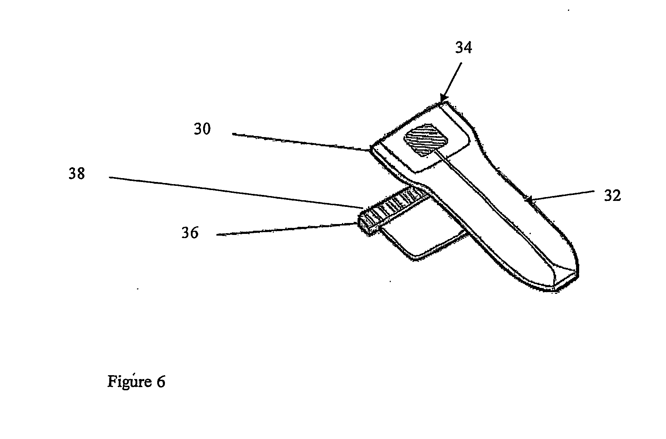

Referring next to Figure 6, there is shown a preferred embodiment of sample carrier, in this example in the form of a test strip or chip 30. This is formed as a small hand-held element intended for a single use application. It is typically preloaded with the appropriate chemical elements, in this example magnetic carrier particles and labels, these being bound to antibodies for the detection of a particular antigen. For this purpose, the chip 30 is provided with a plurality of chambers within its structure, some examples of which are described below.

In this embodiment, the chip 30 includes to its casing a handle portion 32 for ease of handling by medical staff and a processing portion 34 at a front end thereof which includes a suitable port for the insertion of a specimen to be tested and for coupling into a detector, of which an embodiment is described below. Typically, the inlet port allows a sample of fluid, blood for example, to be drawn into the chambers of the device by capillary action.

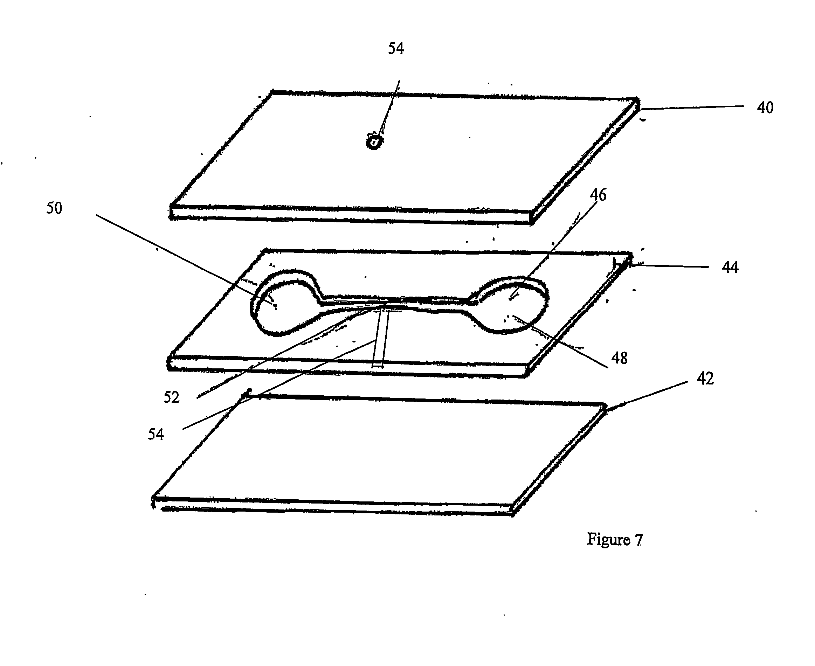

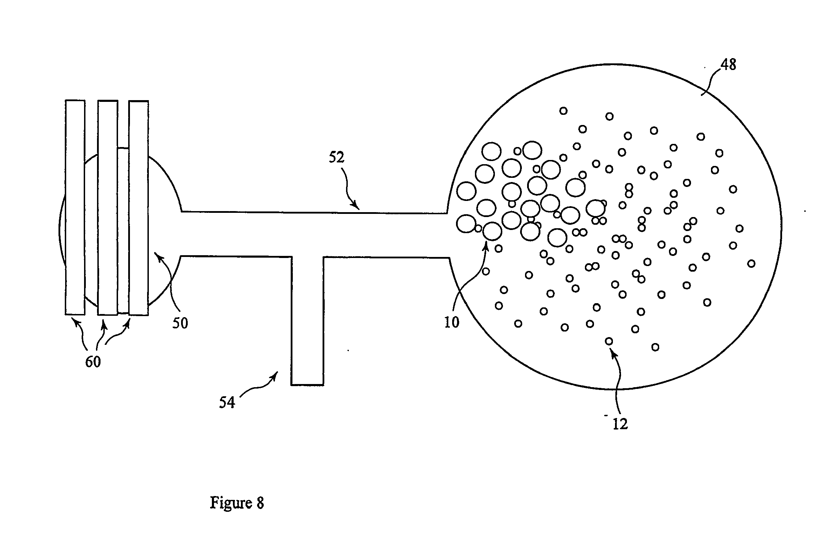

The processing portion of the chip 30 is provided with an incubation chamber and a detection chamber separated by a conduit, that is having a structure equivalent to that shown in Figures 7 and 8 described below.

Figure 6 also shows the chip 30 provided with a data connector 36. The data connector includes one or more devices for providing data to detector unit (described in detail below) relating to the class and/or nature of the chip, for example the antigen the chip is arranged to test, data relating to the antigen itself, test parameters and so on. Further description of the data connector are described below.

Figure 6 shows the data connector 36 as a separate element to the chip 30, in which case it can be coupled to a detector at any suitable port location separate from the position at which the chip is attached to the detector. It is envisaged for other embodiments that the data carrier 36 could be integrally formed with the chip 30, possibly as an integral part of the casing of the chip 3 0.

It is preferred that the chip 30 is made as a simple and cheap component. In one embodiment, depicted in Figure 7, the chip is formed as a sandwich structure having a plurality of layers, among these upper and lower covers layers 40, 42. There is provided at least one central layer 44, for example of a film, having a cut out 46 providing the incubation and detection chambers 48, 50 of the device as well as a separation channel 52 therethrough. These chambers are closed off by the inner surfaces of the top and bottom elements 40, 42 of the device. The top 40 is provided with an aperture 54 therein which aligns with the channel 52 for the introduction of a sample to be tested, as described in further detail below.

Figure 7 illustrates an advantageous and convenient structure for the chip 30, which is easy and cheap to produce and which therefore can readily be provided as a single use device at little cost. Specifically, it is only necessary to provide three layers of suitable material, the top cover 40 with a suitable aperture moulded or bored therein, the middle layer with the shape of the chambers and conduit cut therein and the bottom layer. These layers can then be assembled and joined together, for example by adhesive, heat bonding or in any other suitable way, in order to create within the device 30 the fluid tight chambers and conduit. Other embodiments are, however, contemplated including, for example, forming the chambers 48, 50 and conduit 52 on an inner side of one or both of the outer layers 40, 42, in which case the device may only require two elements, the top and bottom halves 40, 42 to the casing. Of course, this would require a specific mould design rather than being able to be made from flat film, as is the case with the embodiment illustrated in Figure 7.

It is preferred to provide to the incubation or mixing chamber 48 one or more vents to allow the escape of air during the insertion of a sample into the device. Such vents could be provided as small apertures in the upper cover 40 of the chip or as small channels in the layer 44 or in any other suitable form.

The chip 30, although preferably of a substantially flat and planar configuration, could have any other shape, particularly when it is formed of a plurality of moulded parts. A flat configuration as shown is preferred for ease of handling, correct orientation in a detector device and labelling.

In the preferred embodiments, the chip 30 is made from an inert material, including: a plastics material, glass, silicate, polysilicate, a polycarbonate, polystyrene, nylon and so on.

The schematic example shown in Figure 7 would be complemented by a connector element for coupling to a detector device and by one or more terminals for the detection of the ions or other labels provided therein. In the preferred embodiment, and as shown in the drawings, the detection terminals 60 are electrical terminals for detecting an electrical characteristic of the sample in the form in the detection chamber. However, other types of detection terminals or probes are envisaged for detecting other parameters, such as optical terminals, resonance terminals, plasmodic terminals, vibrational (such as Raman) terminals or acoustic wave terminals.

The simplicity of the chip 30, in whatever form it is provided, enables it to be useful and viable as a throw-away item for testing an antigen. There are described below different embodiments which can provide for the testing of a plurality of antigens within a single chip.

It is envisaged that in some practical embodiments the chip 30 could be a few centimetres in length, preferably up to 10 cm, and a few centimetres in width, preferably up to 4 centimetres; and most preferably it has dimensions of around 4 x 2 centimetres. The chambers 48 and 50, as well as the conduit 52 and port 54, the latter where appropriate, preferably have heights of up to 1 mm and preferably between 5 µm to 500 µm. This can promote capillary action of fluid within the device 30. It is preferred that the incubation chamber 48 has a volume of around 0.5 µl to around 100 µl, most preferably from 1 to 10 µl. The detection chamber 50 preferably has a volume up to around 20 µl and most preferably from 0.5 to 5 µl. The conduit 52 preferably has a volume of 0.1 µl to 10 µl, most preferably 0.5 µl to 3 µl. The conduit 52 preferably has a length between 1 mm and 5 cm and most preferably between 0.5 and 2 cm; a width preferably of around 1 to 5 mm, most preferably of around 1 to 3 mm and in the preferred embodiment of around 2 mm.

Referring now to Figure 8, there is shown a schematic diagram of the internal arrangement of the chip 30 loaded with carriers and labels, that is in a form in which it would be supplied to an end user such as a general doctor, ambulance or hospital staff.

As each chip is intended to be for a single use, it is preloaded with the elements associated with a particular antigen, that is with an inert fluid carrier of suitable form throughout the chambers and conduit of the device, with magnetic particles 10 and label particles 12 suspended in the liquid carrier, each of the particles 10 and 12 provided with the appropriate antibodies 14, 22 for the particular antigen to be tested, in the incubation chamber 48 and with, in this example, an ionising substance in the detection chamber 50.

The port 54 is coupled at a position along the conduit 52 and is sized to draw a sample to be tested, for example in medical applications a blood, saliva or other bodily sample, by capillary action. The location of the port 54 is such that the flow of fluid into the device 30 will naturally push the elements in the chambers 48, 50 apart and thus assists in isolating the label particles 12 from the detection chamber 50 until these are carried to this as intended.

Similarly, the conduit 52 is preferably of a size to allow passage of the combined carrier/antigen/label particles therethrough by means of, in this example, an external magnetic force but insufficient for significant natural migration. In the preferred embodiment, the chip 30 is pre-loaded with the carrier and label particles 10, 12 and with the label detecting particles in the chamber 50 and these are preferably either dried or provided in a dried form for storage and transportation purposes. These particles thus remain in the chip 30 in a substantially immovable condition. The introduction of a fluid sample through the inlet 54 hydrates or otherwise causes suspension of the stored particles and allows the device 30 to perform its functions.

In an alternative embodiment, the particles stored in the chip 30 may be stored in a liquid and retained in their respective chambers 48 and 50 by means of a dissolvable or breakable barrier, typically at the part of the conduit 52 between the port 54 and the chamber 50. A breakable barrier could be breached, for example, by the magnetic particles themselves as they are transported to the detection chamber 50. In another embodiment, the conduit 52 could simply be closed, for example by resiliently pressing the walls 40, 42 together or by any suitable closure mechanism.

Thus, when a sample to be tested in fed to the port 54, this is drawn through the port into the conduit 52 and from there into the incubation chamber 48. In the chamber 48, any antigens 16 compatible with the antibodies 14 and 22 will bind to these, thus forming the complexes of carrier 10, antigen 16 and label 12. Any other antigens and substances in the sample will remain dissolved or in suspension in the carrier fluid in the chamber 48 but will not bind either to a carrier 10 or to a label 12.

If necessary or desirable, a moving magnetic field could be applied to the incubation chamber 48 in order to move the magnetic carriers 10 and thereby to stir the mixture. Such a magnetic field could be produced readily by an electromagnetic device and suitable power source, an example being a series of electrical coils suitably arranged over the chamber 48.

The introduced sample is allowed to mix in the chamber 48 for a period deemed sufficient to allow binding of the relevant antigens in the sample to the carrier and label particles 12, a process termed herein as incubation although could equally be described as bonding, combining or other suitable term.

After this incubation period, a moving magnetic field is applied over the chamber 48 and over the conduit 52, in a direction towards the detection chamber 50. This can be achieved by a suitable arrangement of electrical coils positioned over the chip, provided for example in the detector described below, and powered to provide a pulsing electromagnetic field in the direction from the chamber 48 to the chamber 50. It will be appreciated by the skilled person that these coils or a part of these coils could also be used to provide the mixing function within the chamber 48, for example by altering the current supply through the coils to generate different movements within the carrier particles 10.

The moving magnetic field produced draws the magnetic carriers 10 from the chamber 48 into and through the conduit 52, towards and then into the detection chamber 50, that is towards the left in the view of Figure 8. Substantially all of the magnetic particles 10 will and should be drawn to the chamber 50 during this phase, including those to which no antigen has attached. However, label particles 12 which have not become attached to a magnetic carrier 10 and any other antigens and other elements in the sample will remain in the incubation chamber 48 as they will not be influenced by the magnetic force imparted to the chip.

The detection chamber 50 is shown provided with a plurality of electrical terminals 60, typically in the form of a plurality of strips of metal, metallic or otherwise conductive material which extend to the inside of the chamber 50 to be able to measure electrical charge or conductivity as well as, in some embodiments, to impart electrical energy to the contents of the chamber 50.

In the particular example described above, the chamber 50 is filled with ammonium thiocyanate which forms a charged surface of the silver nano-particle which can be attracted to an electrode surface and be electrochemically oxidised. In a modification, the chamber 50 can be filled with an oxidising or ionising compound able to dissolve and ionise the silver particles of the silver sol label 12. This produces a volume of silver ions in the carrier fluid in the chamber 50, in accordance with the depiction of Figure 5. The silver ions, which are positively charged, can be attracted to the electrical terminals 60 by applying a negative potential to these, thereby providing a measurable parameter related to the existence and amount of silver transported to the detection chamber and thereby the existence and amount of the associated antigen in the original sample. The magnetic particles 10 which have not bound to an antigen will not carry any label particle 12 with them and thus will not contribute to the amount of label in the chamber 50. For the purposes of detection, therefore, they will be irrelevant.

It will be appreciated by the skilled person that the provision of electrical terminals 60 is relevant where the label 12 produces a measurable electrical parameter. Other embodiments are envisaged which provide other parameters for measurement, such as colour, illumination, translucency or opacity and any other measurable parameter. In this case, in place of electrical terminals it is envisaged that there would be provided other detection means, such as a photosensor or just a window for such a detector.

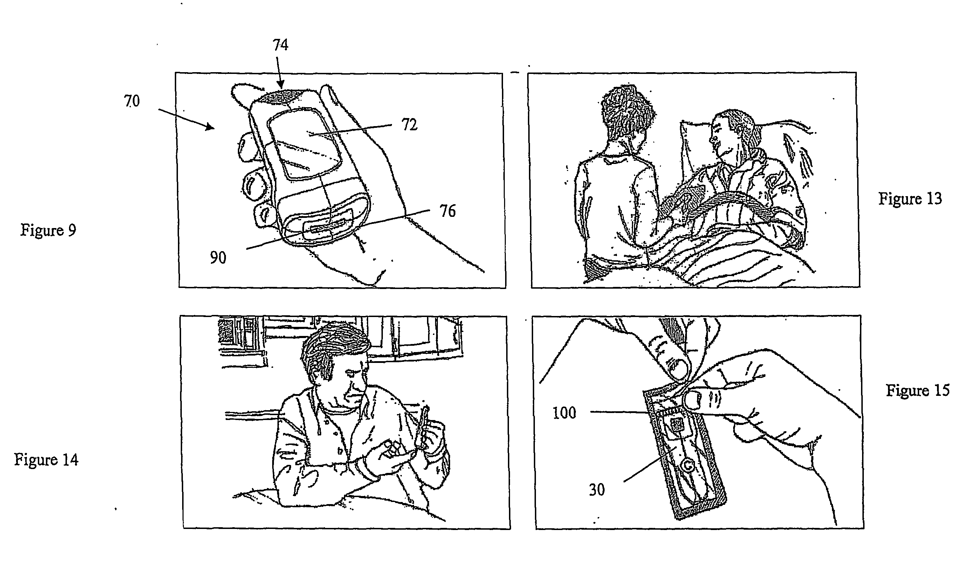

Referring now to Figure 9, there is shown a preferred embodiment of detector unit 70. This is advantageously a hand-held self contained unit able to effect the chemical assay, to interpret the results and to display these on a display screen 72. The detector unit 70 is also provided with one or more operating buttons 74 to enable various common basic operations such as switching on and off the device, resetting the device for a new test and so on. At the other end of the device, there is provided a port 76 designed to receive a test chip 30 of the type described above.

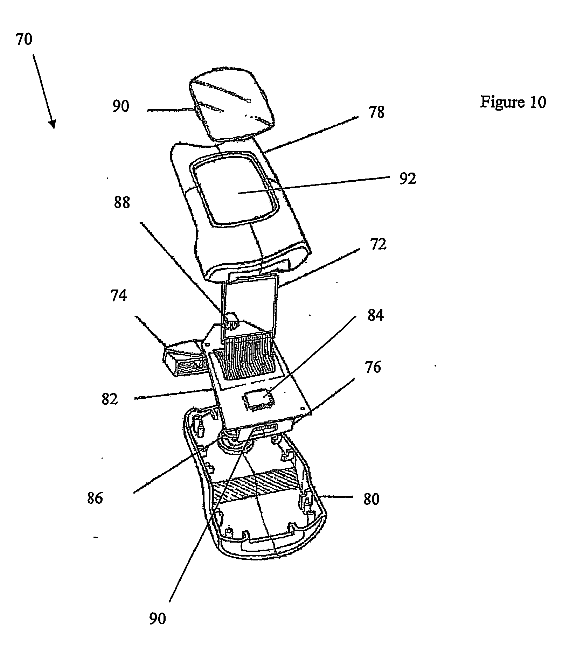

Figure 10 shows an exploded view of the detector device 70 so that the major components thereof can be seen. In this embodiment, the device 70 is formed of a plastics casing of two parts 78, 80 within which there is provided a circuit board 82 which holds the components of the device, including display screen 72, which may be an LCD screen, the connector element 76, suitable circuitry including a microprocessor or logic unit 84 and memory (only one electronic component is shown here but the skilled person will appreciate that in practice there will be a variety). In addition, the circuit board supports a battery 86 and a PCB switch 88 which cooperates with moulded button 74. A cover window 90 covers the access window 92 in the top cover half 78. It will be appreciated that the electronic components of this embodiment could be printed as well as being on a standard PCB board.

The electrical circuitry preferably also includes in an appropriate memory a database of test parameters and data for recognising the test being carried out and for interpreting the measurements as required. Such data is dependent upon the parameters being measured and their correlation with the ailment the subject of the test. The skilled person will readily appreciate the nature of this data as it forms part of the skilled person's common knowledge.

The detector unit 70 may include other components, such as a buzzer or loudspeaker for producing warning signals, connectors to computers and so on.

The connector element 76 is configured to hold the test chip 30 substantially immovably relative to the unit 70 and includes electrical components suitable for imparting to the test chip 30 the magnetic field for moving the magnetic carrier particles 10 within the chip and an electrical coupling element for coupling to the terminals 60 of the chip 30 for measuring the electrical signal produced during the test. In addition to these components, the tester 70, via the connector element 76 or another separate component (not shown) is arranged to be able to receive and read the data on the data carrier 36.

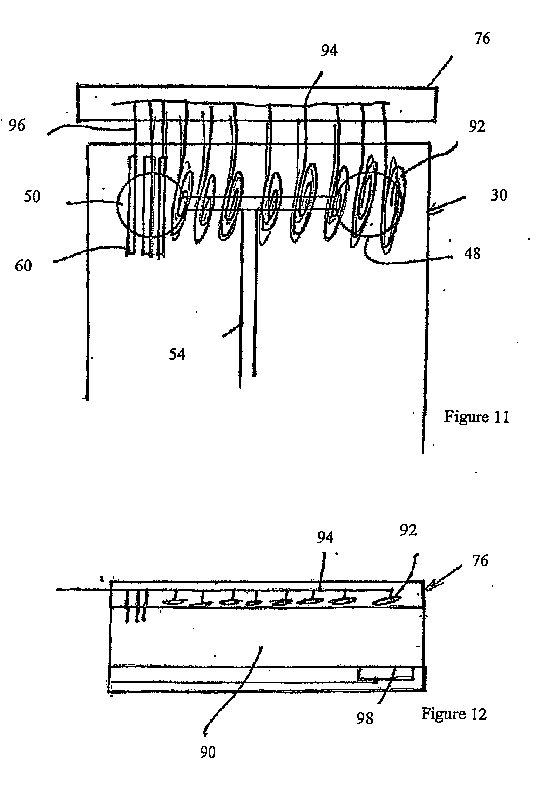

An example of a suitable configuration for the connector element is shown in schematic form in Figures 11 and 12.

The test chip 30 can be seen located below the components of the detector 70 which cooperate with the test chip 30. In particular, within the slot 90 of the connector 76 there is provided a linear array of electrical coils 92, which locate over the chambers 48, 50 and conduit 52 of the test chip 30. These are coupled through a suitable connector bus 94 to the circuitry 84 of the detector 70, in a manner which will be apparent to the skilled person. The connector 76 is also provided with a plurality of electrical terminals 96 which connect with the electrical terminals 60 of the test chip 30 and these terminals 96 are likewise coupled to the circuitry 84. The arrangement is such that the components of the detector 70 do not contact nor come into fluid communication with the sample in the test strip 30.

Figure 12 shows a possible practical implementation of the elements of Figure 11. Figure 12 shows in schematic form and in partial cross-section a front elevational view of the connector 76. A chip 30 would slide into the connector 76 in a direction into the paper in the view of Figure 12. Advantageously, the electrical coils 92 are embedded into the plastics structure of the connector 76, as is the electrical bus 94. Thus, when a chip 30 is inserted into its predetermined position within the connector, the chambers 48, 50 thereof align automatically with the coil 92, as do its electrical terminals 60 with the terminals 96 of the connector 76, the latter extending into the slot 90.

In use, the electrical circuitry is operable to generate a current in selected ones of the coils 92, in so doing generating an electromagnetic field and force which passes into the chip 30. The coils 92 can be energised in one mode, and in one embodiment, to mix the elements in the induction chamber 48 after the introduction of a sample into chip 30. Similarly, the coils 92 can be energised so as to create a travelling electromagnetic field in the direction from the chamber 48 to the detection chamber 50 when it is desired to move the magnetic particles 10 to the detection chamber 50. The precise electrical mechanism for creating such electromagnetic fields is well within the ability of the appropriate skilled person.

In another embodiment, the detector unit 70 is provided with a plurality of solid magnets or solenoid magnets. These are moved across the chip 30, in a direction from the incubation chamber 48 to the detection chamber 50, in order to move the magnetic particles 10 to the detection chamber and with these the antigens and labels attached thereto. One practical embodiment provided a series of solid magnets at a periphery of a rotating disc part of which rotates over the chamber 48 and conduit 52 so as move the magnets thereacross. Such magnets could also be moved to provide a mixing force within the chamber 48. However, in all cases the components of the detector 70 do not touch nor come into fluid communication with the sample which remains enveloped by and within the chip 30.

Figure 12 also shows the provision of an identification detector 98 in the lower wall of the connector 76. This would be provided in cases where the chip 30 itself carries an identifier, such as a machine readable code (for example a bar code, lettering or numbering) or even a mechanical code, such as a key coding element formed within the casing of the chip 30. The detector element 98 may also provide for data transfer to the circuitry 84 in cases where the chip carries some form of electronic data, such as data relating to the test it is intended to carry out in electronic form, data relating to the test parameters.

In some embodiments it is also envisaged that the chip 30 or a dummy chip could carry updating software for the detector unit 70, which software could be downloaded through the detector element 98 in the connector 76 or an equivalent element provided elsewhere on the casing of the unit 70. This would provide a convenient and efficient method of updating the device 70 with data relating to a new test to be carried out, such as to detect a new antigen or other medical condition, as well as to provide general software updates. The unit 70 could therefore be kept constantly updated without the need to service the device elsewhere.

It is envisaged in some embodiments that the chip itself could be an "intelligent" chip, that is the chip could carry the data required for identifying the test it is designed to carry out and to provide the data for interpreting the results of any measurements taken by the unit 70. In this case, the detector element 98 and the circuitry 84 are designed solely to read data from the chip 30 and, as appropriate, to interrogate this to obtain the required data.

Referring now to Figures 13 to 22, there is shown an example of a use of the chip 30 and detector device 70 in a medical application, for example by a nurse of physician for diagnosis on a patient, as shown in Figure 13, or by a patient personally, as shown in Figure 14.

The chip 30 is provided in a sealed pouch 100 which in this embodiment is provided with a clear front window to allow sight of the chip 30, useful in cases where the chip carries markings on it such as the type of the chip 30.

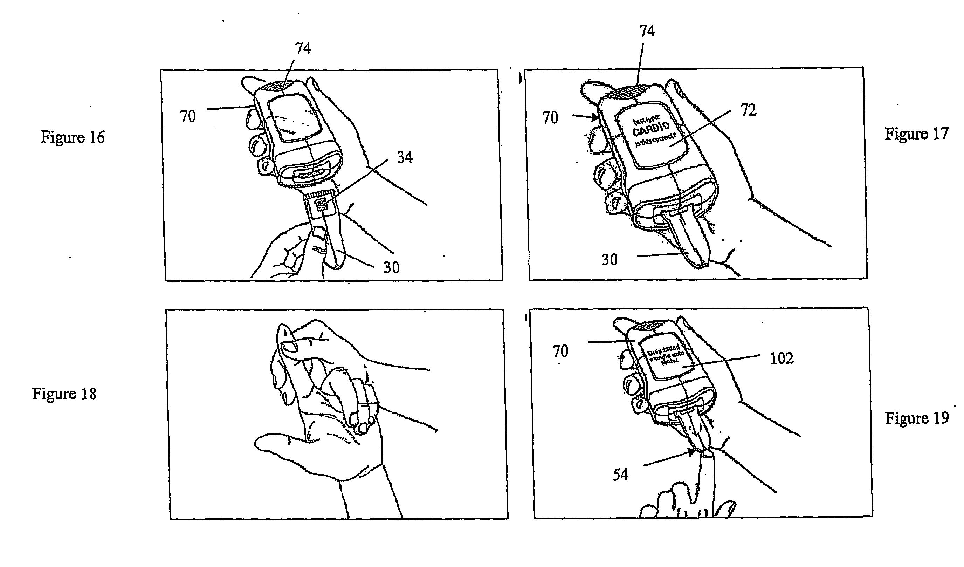

It is preferred, as shown in Figures 16 and 17, that the chip, once removed form the pouch 100, is checked in the tester 70 to ensure that it is the correct chip for the test to be preformed. For this purpose, the detector 70 can be made to read the identifier on the chip 30 and to display an indication of the test which the chip 30 is designed to be carried out. In this example, the chip 30 is designed to carry out a cardio performance check on a patient. In this case, the test might look for a change in one of the following indicators of cardiac malfunction such as myglobin, troponin - I or T, NT-pro-BNP (Brain Nutreated protein) or straight BNP; for which the binding elements 14, 22 of the carrier particles 10 and the labels 12 have appropriate moieties, such as antibodies, mimitopes or DNA or RNA.

Once the user has ascertained that the chip 30 is the correct one, the test sequence is initiated by appropriate depression of the button or buttons 74. Advantageously, the unit 70 then guides the user through the various steps of the procedure by suitable instructions on the display 72.

The first step of the procedure, in this particular example, is for the patient, or carer, to obtain a blood sample form the patient, typically by a pin prick, as shown in Figure 18.

In this embodiment, the chip 30 is provided with its port 54 at the end thereof, in which case the port is coupled through an elongate conduit 102 to the conduit 52 between the chambers 48 and 50 of the device. Advantageously, in this example, the chambers 48 and 50 would lie cross-wise at the end 34 of the chip 30 and thus wholly within the connector 76 of the device 70, as will be apparent in particular from Figures 17 and 19.

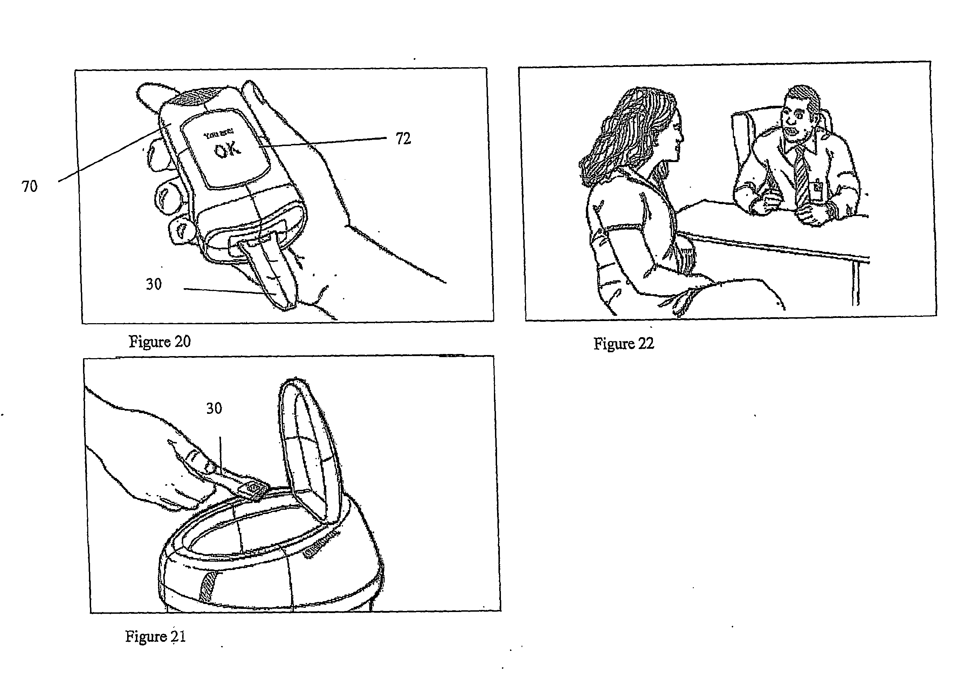

Once the user has deposited a blood sample into the chip 30, the device 70 can be operated, again by suitable depression of the button or buttons 74, or simply after a predetermined time period, to commence the mixing and transport phases within the chambers 48 and 50 and then to take a reading through the electrodes 60 and 96. The unit 70 will then determine whether or not the patient possesses the antigens for which the test was carried out and therefore the associated medical condition. In the example of Figure 20 the device 70 is designed to display a simple positive or negative determination to the test, that is whether the patient does or does not have the particular ailment. In other embodiments or medical tests, the unit 70 can be arranged to give an indication of the quantity of the parameter tested, for example the level of antigens and thus seriousness of the ailment.

Detection of the ions in the detection chamber 50 can be effected in a variety of manners, the detector unit 70 not being specific to any one of these tests. In one example, the detector unit 70 is operable to apply to one of the electrodes 60, that is a working electrode, a positive voltage which attracts the ions, causing these to migrate to or concentrate on the electrode and in effect to plate this with ions. After a suitable time period, the polarity of the working electrode is reversed, causing the ions to be stripped off in an ion cloud. The concentration of ions is detected by measuring the current through the other two electrodes over this sweeping voltage. There are provided in this embodiment two other electrodes, one being a counter electrode and the other a reference electrode. In the case of a very small chip 30, however, there may be provided only two electrodes, it not being necessary to have a counter electrode.

After the test, the chip 30 can be discarded with other medical waste. As none of the sample tested comes into contact with the unit 70 during the test, the unit 70 is immediately ready for carrying out other tests without requiring sterilisation.

The device and chip, in being able to test for a single element and requiring only a small sample for analysis, are able to provide a result much faster than more complex test systems and methods. Therefore, a physician such as a general practitioner can carry out the test during a medical examination and has the results of that test virtually immediately, thus being able to offer the patient immediate and appropriate medical treatment. This can be particularly useful in many applications and can save the days it can sometimes take to receive the results of medical tests from a separate laboratory. One example is in detecting whether a patient has been infected with a particular virus such as a new strain of influenza, measles, meningitis or other. In such a circumstance, the general practitioner could be provided with a selection of different chips 30 and is able within the one consultation to test the patient until the virus the patient has is identified. The patient can then be given the correct medical treatment immediately.

In prototype testing it has been found that the test can be carried out in a matter of minutes, in some cases a few tens of seconds, compared to hours and longer with traditional testing systems.

Moreover, as the sample chip 30 tests only for a single specific condition or infection, it is cheap to produce and it is therefore economically and practically feasible for single use applications. In addition, assays are not wasted where only a single condition is to be tested, as would be the case with a 'laboratory-on-a-chip' which might test for five or more conditions simultaneously. A further advantage of having each sample chip 30 testing for a single specific condition is that it is not necessary to perform a complex analysis of conditions or infections.

Since there is no relative movement of the device and chip, the device is simple and intuitive to use, and can be easily manufactured in a portable size and shape and a robust configuration.

It will be appreciated that since the device 70 does not come into physical contact with the sample, the device can be used over and again without needing to be cleaned or sterilised and without risk of contamination.

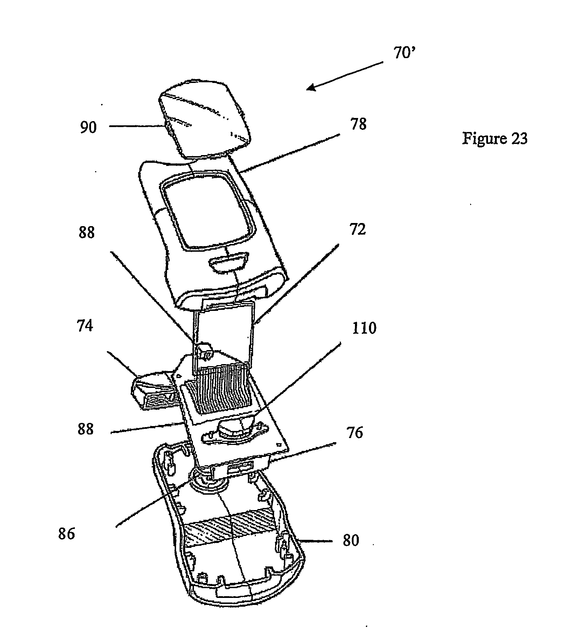

Referring now to Figure 23, there is shown another embodiment of detector unit 70' similar to that of Figures 9 to 20 and described above. It differs in that it comprises a communication button 110 and a wireless communication device (not shown). The purpose of these two features is that when the assay is complete, the user activates the communication button 110 which in turn actuates the device 70' to transmit the results of the assay wirelessly, using the wireless communication device, to a separate terminal. The data can be sent in computer processable form in a secure transmission. The terminal may be at the office of the patient's doctor, for instance if the doctor has supplied the patient with the diagnostic unit 70' for regular testing. Alternatively, the terminal may be the central database at a hospital so that the patient records can be kept up-to-date. The data may be available for access by a plurality of authorized users.

This embodiment can also be very useful to a paramedic. Communication with a hospital not only allows this to be given advance warning of what treatment will be required when the patient arrives but also enables a more thorough and reliable diagnosis to be made, since the hospital database will contain details of previous assays and prior conditions of the patient. Such advance communication to a hospital can be of huge benefit in cases where a patient needs urgent medical attention, in which can diagnosis can be carried out during transit to the hospital so this can be prepared with the correct treatments the moment a patient arrives. An example where such advance diagnosis can be crucial is in the case of myocardial infarction, where the faster a patient can be treated the greater is the risk of avoiding long term damage. In addition, such in situ diagnosis as is possible with such a device will allow paramedic staff to effect some metical treatment on site or during transit to a hospital, again very useful in cases where a patient would benefit form early medical treatment. At present, in light of the lack of diagnostic facilities of this kind in ambulances and other paramedic vehicles, such advance treatment is not possible.

All other features of the device 70 shown in Figures 10 to 22 and described above are included in the device 70' of Figure 23.

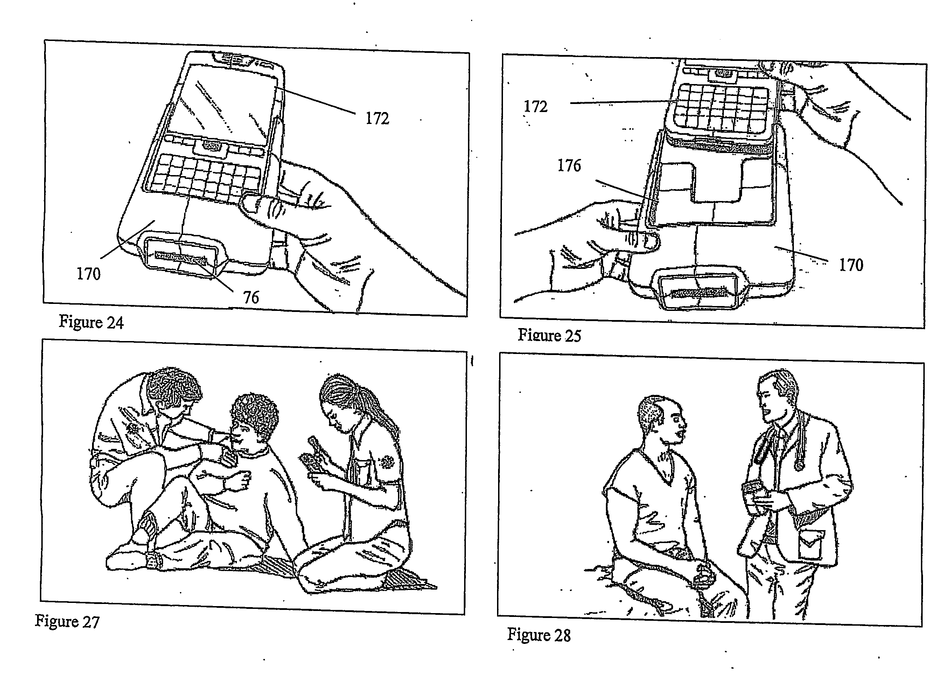

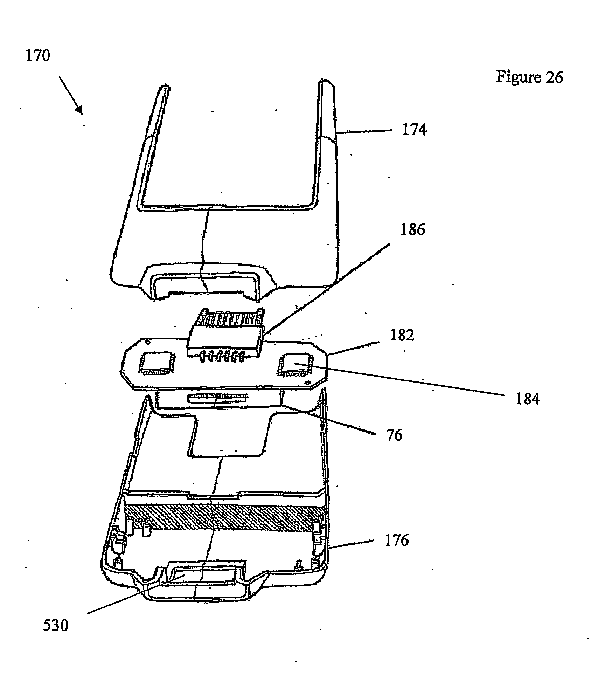

Another embodiment of diagnostic unit is shown in Figures 24 to 26. Figure 24 shows a diagnostic unit 170 for connection to a personal digital assistant (PDA) 172, of a type typically used by hospital and other medical personnel. The unit 170 includes a casing having an upper half 174 and a lower half 176 which are shaped to provide a cradle chamber 176 for holding a compatible PDA 172. The unit includes a circuit board 182 supporting circuitry 184 and a connector 176, all of which are analogous to the equivalent elements of the embodiment of detector 70 described above. In this embodiment, the device 170 may be powered from the power supply of the PDA 172 and therefore need not be provided with its own battery, although some implementations might provide for this. The circuit board 182 also supports a connector 186 compatible with a corresponding connector on the PDA 172.

It is envisaged that the cradle detector 170 of Figures 24 to 26 could either be an intelligent device which uses the PDA 172 as a dumb terminal or could be simply an interface to the PDA 172, in which case the PDA 172 is provided with software appropriate to drive the cradle unit 170 and to analyze the readings obtained therefrom. The choice will generally be a personal choice of a supplier of these devices and, in some instances, of the user.

The unit 170 is preferably configured so that the roles previously performed by the moulded button or buttons 74 and the display 72 (as well as the communication button 110 of the embodiment of Figure 23) are performed by the PDA device 172.

The unit 170 includes all of the features described above in connection with the units 70 and 70' with respect to the moving and sensing units in terms of non-contact with the sample, as well as with holding the sample carrier relatively immovably in the device.

An example of usage of the cradle-type device 170 of Figures 24 to 26 is shown in Figures 27 to 36.

As can be seen in Figure 27, the device is being used to attend to a person who has collapsed in the street, that is by a paramedic. On site, the paramedic can insert her PDA 172 into the cradle 170 before selecting one or more chips 30 to test for one or more possible causes of the patient's ailment. In Figure 28, the cradle-type device 170 is being used in a hospital environment by a medical consultant.

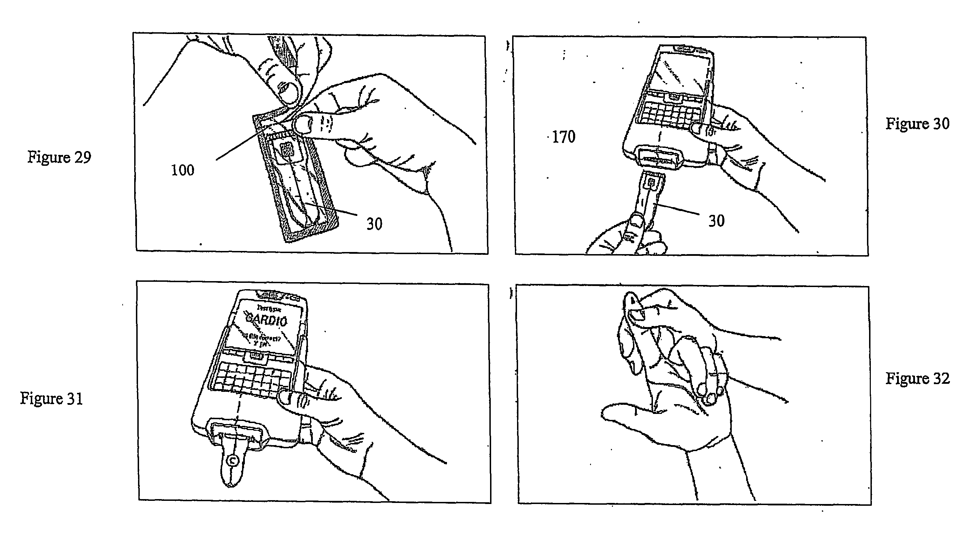

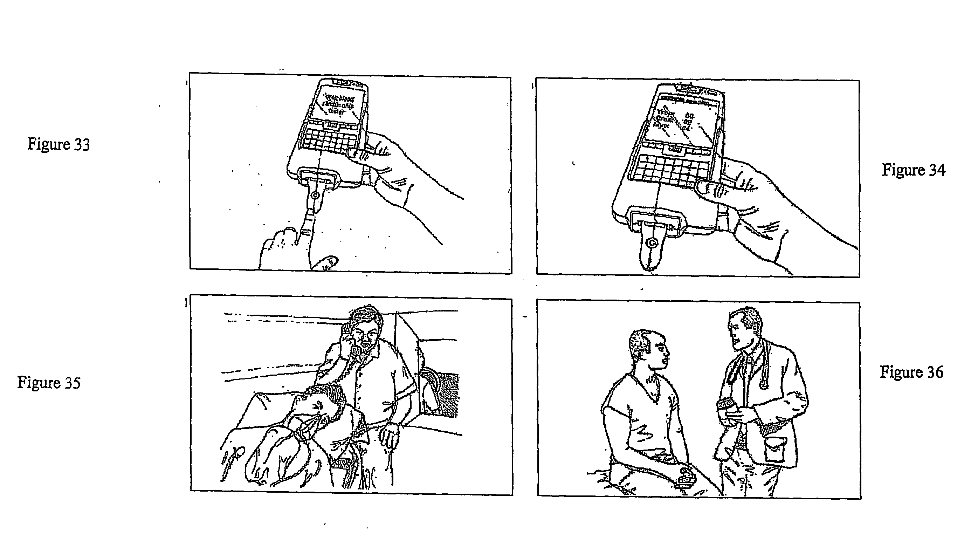

The mode of operation of the device 170 is equivalent to the embodiment 70 described above, as will be apparent from Figures 29 to 34. In Figure 35, the system is shown being used during transportation of a patient to a hospital, in which the paramedic has carried out a diagnosis and, in this example, is in the process of contacting the hospital to warn it of the patient's condition and, where appropriate, to receive instructions for carrying out preliminary medical treatment on the patient before arrival. This can save critical time in treating the patient, useful in many procedures including myocardial infarction.

Similarly, in some cases the paramedic may be able to ascertain that the patient does not have a medical condition which requires hospital treatment, in which case the patient can be taken straight home for recovery, saving valuable hospital resources.

Of course, being able to attach the detector device 170 to a PDA 172 means that the medical staff can have to hand the facilities and data from their conventional PDA's, functionality with which they are accustomed and are not required to transfer data from one device to another. Instead, they can keep all of their data on their PDA device 172 and simply dock it into the diagnostic unit 170 to carry out a test. This also allows the medical practitioner to have ready access to the patients' medical data.

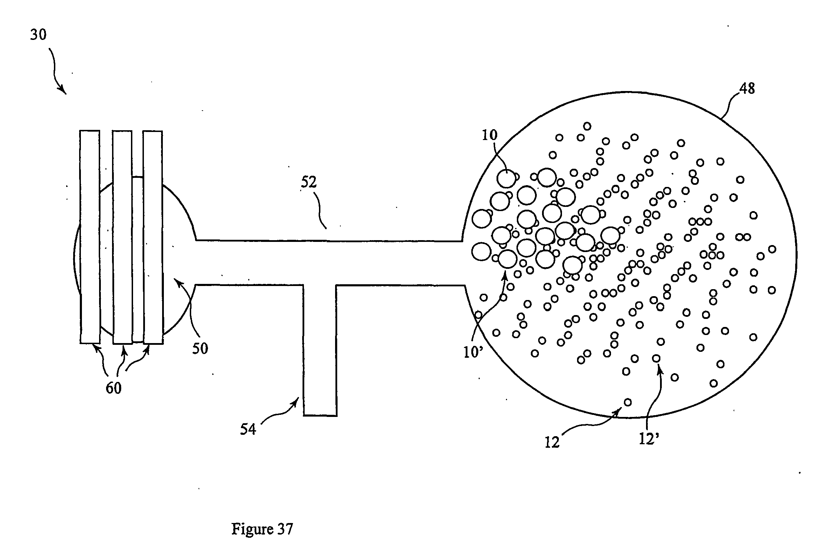

Referring now to Figure 37, there is shown a view of a test chip 30 similar to that of Figure 8. The difference lies in the contents of the chip, in particular in the induction chamber 48. In this embodiment, the contents in the chamber 48 is provided with two different label particles 12, 12', which may for example be of different metals such as silver, gold, copper, zinc, lead and so on, or particles loaded with a redox species such as an aromatic compound or dye. Any type of label particles 12, 12' could be used as long as these allow for detection by different means or attachment to carrier particles 10, 10' which can be transported by different mechanisms. In the case of labels which provide different measurement characteristics, these could for example be silver and gold, which can be detected by known methods. In an alternative, one of the label particles could be of a type which provides a measurable electrical parameter while the other a measurable optical parameter. Any combination of labels could be used.

In the embodiment of Figure 37, the different label particles 12, 12' are provided with antibodies specific to a particular antigen each. The magnetic carrier particles 10 are identical in their magnetic parts but have different antibodies such that they connect to respective antigens.

Therefore, at incubation, antigens of a first type become bound to a first label 12 and a first magnetic support 10, and antigens of a second type become bound to a second label 12' and a second magnetic support 10'. After incubation, the magnetic particles 10, 10' are drawn to the detection chamber 50 and analysed in accordance with the appropriate analysis method for the label attached to them.

For this purpose, a detector unit 70, 170 would be provided with a plurality of sensors, one for each type of label used.

It will be apparent that the embodiment of Figure 37 could be used to test for more than two antigens or other elements in a sample, by appropriate provision of different label particles and connector elements (antibodies in the case of antigens).

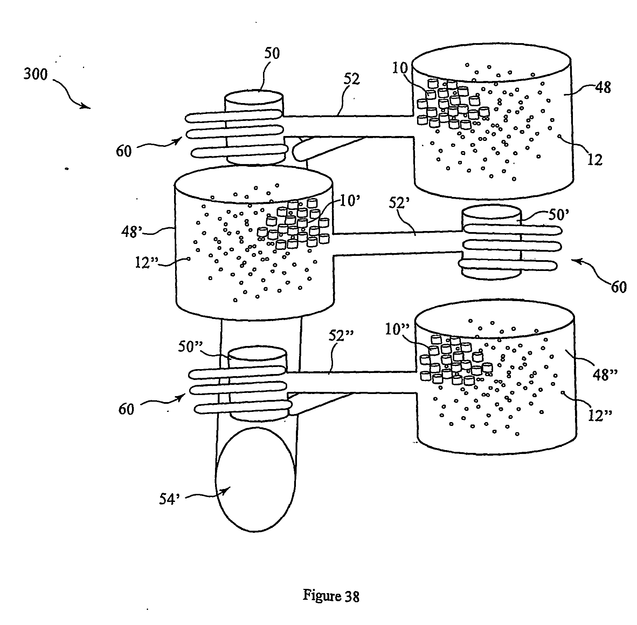

Referring next to Figure 38, there is shown an embodiment of chip 300 suitable for testing separately for three different antigens from a single sample, for example. This embodiment provides a stack arrangement of different sets of chambers and connecting conduits 48-50, 48'-50' and 48"-50" each provided with magnetic carrier particles 10, 10' and 10" and labels 12, 12' and 12". A common feed port 54 is coupled to each of the conduits 52 to feed a part of a collected sample into each of the test zones. In this way, each test zone can test for a particular antigen, by mans of appropriate antibodies on the magnetic and label particles, while keeping these separate form one another, thereby allowing for use of the same label type, for example silver sol.

The embodiment of Figure 38 can be readily manufactured using a sandwich arrangement of planar layers similar to that shown in Figure 7. In this case, a series of perforated layers 44 is located between a series of imperforate layers (not shown) apart from apertures linking the port 54 to each of the conduits 52. Any number of such layers 44 could be provided so as to test for any number of elements.

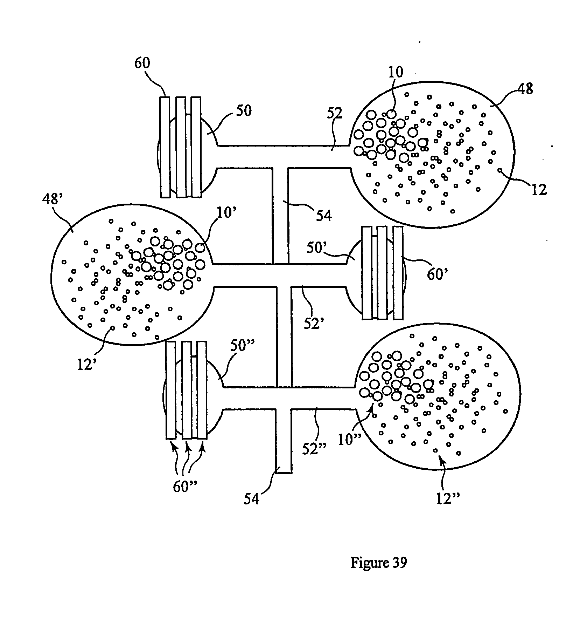

Figure 39 shows another embodiment of chamber design, in this case being a planar configuration in a single layer. The structure is such that there are provided three sets of induction and detection chambers 48-50, 48'-50' and 48"-50" coupled to a common feed port which connects to the three conduits 52, 52' and 52". The arrangement can be readily produced by cutting a corresponding shape in the middle layer of a sandwich design similar to that of the embodiment of Figure 7.

This design also allows for testing of three different elements, such as three different antigens.

In both of the embodiments of Figures 38 and 39 it is preferred that the detector unit, which would be provided with three connector elements for coupling to each of the terminal sets 60, 60', and 60", may be independently controllable.

It will be appreciated that in all embodiments of sample carrier described above and shown in the Figures, the arrangement is such that the detector device does not come into physical contact with the sample and the sample carrier can be held substantially immovably in the device.

Although the above described embodiments are directed to medical applications, the devices and test methods taught herein are not limited to such. They could equally be applied in the testing for numerous other applications including, for example, environmental testing of water pollution, air composition. The list in not limited.

Moreover, other release agents such as thiol with a charged unit may be used in place of the ammonium thiocyanate.

As indicated above, the detector unit does not need to be provided with the software necessary to run the assay. Instead, the test chip itself can be provided with a smart card for other device which can provide the information and in some instances the control for the detection unit.

The above-described embodiments show a sample carrier 10 which is in the form of a closed casing. It is envisaged also that the could be an open device. In one example, the sample carrier is in the form of a substantially flat structure provided with a series of zones made or of coated with a hydrophilic substance providing the chambers 48 and 50 and conduit 52 (the inlet 54 possibly being a zone of the conduit 52), and surrounding zones being made of or coated with a hydrophobic substance. In another example, the chambers 48 and 50 and conduit 52, optionally the inlet 54, are formed as depressions in a substantially planar substrate.

Features of the above embodiments and modifications can be combined and interchanged as required.

## Claims

1. A test device for testing for one or more characteristics of a sample carried by a sample carrier, including a holder designed to hold the sample carrier substantially immovably in a predetermined relative position; a control unit; a movement unit operable to effect movement of a sample to be tested within the sample carrier; a sensing unit operable to sense one or more parameters relating to the contents or characteristics of the sample; diagnostic means operable to determine a diagnostic condition on the basis of the sensed parameter or parameters and an information unit operable to provide information relating to the diagnosis; wherein the movement unit and the sensing unit include non- contact movement and sensing means respectively for moving a sample and for sensing said one or more parameters without contact with the sample; the device being arranged so that in use there is no relative movement of the device and the sample carrier.

2. A test device according to claim 1, wherein the control unit includes a memory for storing measurement and condition data for diagnostic purposes.

3. A test device according to any preceding claim, including a communication unit operable to transmit and/or receive data relating to a sample test, wherein the communication unit preferably includes a wireless transmitter and/or receiver.

4. A test device according to any preceding claim, wherein the device is updatable.

5. A test device according to any preceding claim, wherein the test device is a handheld unit.

6. A test device according to any preceding claim, wherein the test device includes an attachment and an electronic processing device, the attachment including the movement unit and the sensing unit, wherein the attachment is preferably in the form of a cradle.

7. A test device for testing for one or more characteristics of a sample carried by a sample carrier, which test device is in the form of an attachment device attachable to a portable electronic processing device; the attachment device including a holder designed to hold the sample carrier substantially immovably in a predetermined relative position; a movement unit operable to effect movement of a sample to be tested within the sample carrier; a sensing unit operable to sense one or more parameters relating to the contents or characteristics of the sample; and an interface unit to a control unit of an electronic processing device for use in determining a diagnostic condition on the basis of the sensed parameter or parameters and for providing information relating to the diagnosis; wherein the movement unit and the sensing unit include non- contact movement and sensing means respectively for moving a sample and for sensing said one or more parameters without contact with the sample; the device being arranged so that in use there is no relative movement of the device and the sample carrier.

8. A test device according to claim 7, wherein the attachment device is in the form of a cradle.

9. A test device according to any preceding claim, wherein the movement unit is operable to generate an electromagnetic or electrical field for moving a sample to be tested.

10. A test device according to any preceding claim, wherein the sensing unit is operable to sense electrical, optical, magnetic, resonance, plasmodic, and/or acoustic characteristics pertaining to a sample to be tested.

11. A test device according to any preceding claim, including an identification detection unit operable to detect an identifier of the sample carrier, wherein the identification detection unit is preferably operable to detect an identifier carried on the sample carrier.

12. A test device according to any preceding claim, including retrieval means operable to retrieve sample and/or test data associated with the sample carrier, wherein the retrieval means is preferably operable to retrieve data located on a device on the sample carrier.

13. A test device according to any preceding claim, including a holding device for holding a sample carrier, wherein the holding device preferably includes a slot for receiving a sample carrier.

14. A combination of a test device and a sample carrier, the test device being operable to test for one or more characteristics of a sample carried by the sample carrier; the combination including: a holder designed to hold the sample carrier substantially immovably in a predetermined relative position; a control unit; a movement unit operable to effect movement of a sample to be tested within the sample carrier; a sensing unit operable to sense one or more parameters relating to the contents or characteristics of the sample; diagnostic means operable to determine a diagnostic condition on the basis of the sensed parameter or parameters and an information unit operable to provide information relating to the diagnosis; wherein the movement unit and the sensing unit include non- contact movement and sensing means respectively for moving a sample and for sensing said one or more parameters without contact with the sample; the device being arranged so that in use there is no relative movement of the device and the sample carrier.

## Patentansprüche

1. Testgerät zum Testen auf das Vorliegen von einem oder mehreren Merkmalen einer Probe, die von einem Probenträger gehalten wird, umfassend einen Halter, der derart gestaltet ist,
dass der Probenträger im Wesentlichen unbeweglich in einer vorbestimmten relativen Position gehalten wird; eine Kontrolleinheit; eine Bewegungseinheit mit der die Probe, die getestet werden soll, innerhalb des Probenträgers bewegt werden kann; eine Sensoreinheit mit der ein oder mehrere Parameter, die den Inhalt oder Merkmale der Probe betreffen, erfasst werden können; ein Diagnosemittel mit dem ein diagnostischer Zustand auf Grundlage des erfassten Parameters oder Parameter bestimmt werden kann; und eine Informationseinheit, mit der Informationen erhalten werden können, die die Diagnose betreffen; wobei die Bewegungseinheit und die Sensoreinheit ein berührungsfreies Bewegungsmittel beziehungsweise Sensormittel aufweist, mit denen die Probe bewegt und der eine oder die mehreren Parameter erfasst werden können ohne die Probe zu berühren, wobei das Testgerät so angeordnet ist, dass im Betrieb keine relative Bewegung von Gerät und Probenträger erfolgt.

2. Testgerät nach Anspruch 1,
wobei die Kontrolleinheit einen Speicher zum Speichern von Mess- und Zustandsdaten zu Diagnosezwecken enthält.

3. Testgerät nach einem der vorhergehenden Ansprüche,
die eine Kommunikationseinheit aufweist mit der Daten gesendet oder empfangen werden können, die einen Probentest betreffen, wobei die Kommunikationseinheit vorzugsweise einen drahtlosen Sender und/oder Empfänger aufweist.

4. Testgerät nach einem der vorhergehenden Ansprüche,
wobei die Vorrichtung aktualisierbar ist.

5. Testgerät nach einem der vorhergehenden Ansprüche,
wobei das Testgerät ein Handgerät ist.

6. Testgerät nach einem der vorhergehenden Ansprüche, wobei das Testgerät ein Ansatzteil und eine elektronische Verarbeitungseinheit aufweist, wobei das Ansatzteil die Bewegungseinheit und die Sensoreinheit enthält, wobei das Ansatzteil vorzugsweise die Form einer Halterung hat.

7. Testgerät zum Testen auf das Vorliegen von einem oder mehreren Merkmalen einer Probe, die von einem Probenträger gehalten wird, wobei das Testgerät die Form eines Ansatzgerätes hat, das an ein tragbares elektronisches Verarbeitungsgerät angebracht werden kann, wobei das Ansatzgerät einen Halter aufweist, mit dem der Probenträger im Wesentlichen unbeweglich in einer vorbestimmten relativen Position gehalten werden kann; eine Bewegungseinheit mit der eine Probe, die getestet werden soll, innerhalb des Probenträgers bewegt werden kann; eine Sensoreinheit mit der ein oder mehrere Parameter, die den Inhalt oder Merkmale der Probe betreffen, erfasst werden können; und eine Schnittstelleneinheit zu einer Kontrolleinheit eines elektronischen Verarbeitungsgerätes für die Feststellung eines diagnostischen Zustandes auf Grundlage des erfassten Parameters oder Parameter und zur Angabe von Informationen, die die Diagnose betreffen; wobei die Bewegungseinheit und die Sensoreinheit ein berührungsfreies Bewegungsmittel beziehungsweise Sensormittel aufweisen, um die Probe zu bewegen und den einen oder die mehreren Parameter zu erfassen ohne die Probe zu berühren; wobei das Gerät so angeordnet ist, dass im Betrieb keine relative Bewegung des Geräts und des Probenträgers erfolgt.

8. Testgerät nach Anspruch 7,
wobei das Ansatzgerät die Form einer Halterung hat.

9. Testgerät nach einem der vorhergehenden Ansprüche,
wobei die Bewegungseinheit ein elektromagnetisches oder elektrisches Feld erzeugen kann, um eine Probe, die getestet werden soll, zu bewegen.

10. Testgerät nach einem der vorhergehenden Ansprüche,
wobei die Sensoreinheit elektrische, optische, magnetische, Resonanz-, plasmodische und/oder akustische Merkmale erfassen kann, die eine Probe, die getestet werden soll, betreffen.

11. Testgerät nach einem der vorhergehenden Ansprüche, enthaltend eine Einheit zur Feststellung einer Kennung, mit der eine Kennung des Probenträgers festgestellt werden kann, wobei mit der Einheit zur Feststellung einer Kennung vorzugsweise eine Kennung, die sich auf dem Probenträger befindet, festgestellt werden kann.

12. Testgerät nach einem der vorhergehenden Ansprüche, das ein Abfragemittel aufweist, zum Abfragen von Probedaten und/oder Testdaten, die mit dem Probenträger verbunden ist, wobei das Abfragemittel vorzugsweise Daten abfragt, die sich auf einer Vorrichtung auf dem Probenträger befinden.

13. Testgerät nach einem der vorhergehenden Ansprüche, das eine Haltevorrichtung zum Halten eines Probeträgers aufweist, wobei die Haltevorrichtung vorzugsweise einen Schlitz zur Aufnahme eines Probenträgers aufweist.

14. Kombination aus einem Testgerät und einem Probenträger, wobei mit dem Testgerät eine Probe, die von dem Probenträger gehalten wird, auf das Vorliegen von einem oder mehreren Merkmalen getestet werden kann; wobei die Kombination enthält:
einen Halter mit dem der Probenträger im Wesentlichen unbeweglich in einer vorbestimmten relativen Position gehalten werden kann, ein Kontrolleinheit; eine Bewegungseinheit mit der eine Probe, die getestet werden soll, innerhalb des Probenträgers bewegt werden kann; eine Sensoreinheit mit der ein oder mehrere Parameter erfasst werden können, die den Inhalt oder Merkmale der Probe betreffen;
ein Diagnosemittel mit dem ein diagnostischer Zustand auf Grundlage des erfassten Parameters oder Parameter festgestellt werden kann, und eine Informationseinheit, die Informationen liefert, die die Diagnose betreffen;
wobei die Bewegungseinheit und die Sensoreinheit ein berührungsfreies Bewegungsmittel beziehungsweise Sensormittel aufweisen, mit denen eine Probe bewegt werden kann und der eine oder mehrere Parameter erfasst werden kann ohne die Probe zu berühren; wobei das Gerät so angeordnet ist, dass im Betrieb keine relative Bewegung des Geräts und des Probenträgers erfolgt.

## Revendications

1. Dispositif de test pour tester pour une ou plusieurs caractéristique(s) d'un échantillon supporté par un support d'échantillon, comprenant un élément de maintien conçu pour maintenir le support d'échantillon de manière sensiblement inamovible dans une position relative prédéterminée ; une unité de contrôle ; une unité de déplacement pouvant être utilisée pour procéder au déplacement d'un échantillon à tester à l'intérieur du support d'échantillon ; une unité de détection pouvant être utilisée pour détecter un ou plusieurs paramètre(s) relatif(s) au contenu ou aux caractéristiques de l'échantillon ; des moyens de diagnostic pouvant être utilisés pour déterminer un état de diagnostic sur la base du ou des paramètre(s) détecté(s) et une unité d'informations pouvant être utilisée pour fournir des informations relatives au diagnostic ; dans lequel l'unité de déplacement et l'unité de détection comprennent des moyens de déplacement et de détection sans contact respectivement pour déplacer un échantillon et pour détecter ledit paramètre ou lesdits paramètres sans mise en contact avec l'échantillon ; le dispositif étant disposé de telle sorte que lors de son utilisation il n'y ait pas de déplacement relatifs du dispositif et du support d'échantillon.

2. Dispositif de test selon la revendication 1, dans lequel l'unité de contrôle comprend une mémoire pour stocker les données de mesure et d'état à des fins de diagnostic.

3. Dispositif de selon l'une quelconque des revendications précédentes, comprenant une unité de communication pouvant être utilisée pour émettre et/ou recevoir des données relatives à un test d'échantillon, l'unité de communication comprenant de préférence un émettre sans fil et/ou un récepteur sans fil.

4. Dispositif de test selon l'une quelconque des revendications précédentes, dans lequel le dispositif peut être mis à jour.

5. Dispositif de test selon l'une quelconque des revendications précédentes, dans lequel le dispositif est une unité portable.

6. Dispositif de test selon l'une quelconque des revendications précédentes, dans lequel le dispositif de test comprend un dispositif de fixation et un dispositif de traitement électronique, le dispositif de fixation comprenant l'unité de déplacement et l'unité de détection, dans lequel l'élément de fixation se présente de préférence sous la forme d'un berceau.

7. Dispositif de test pour tester pour une ou plusieurs caractéristique(s) d'un échantillon supporté par un support d'échantillon, lequel dispositif de test se présente sous la forme d'un dispositif de fixation pouvant être fixé sur un dispositif de traitement électronique portatif ; le dispositif de fixation comprenant un élément de maintien conçu pour maintenir le support d'échantillon de manière sensiblement inamovible dans une position relative prédéterminée ; une unité de déplacement pouvant être utilisée pour procéder au déplacement d'un échantillon à tester à l'intérieur du support d'échantillon ; une unité de détection pouvant être utilisée pour détecter un ou plusieurs paramètre(s) relatif(s) au contenu ou aux caractéristiques de l'échantillon ; et une unité d'interface reliée à unité de contrôle d'un dispositif de traitement électronique servant à déterminer un état de diagnostic sur la base du ou des paramètre(s) détecté(s) et à fournir des informations relatives au diagnostic ; l'unité de déplacement et l'unité de détection comprenant des moyens de déplacement et de détection sans contact respectivement pour déplacer un échantillon et pour détecter ledit paramètre ou lesdits paramètres sans mise en contact avec l'échantillon ; le dispositif étant disposé de telle sorte que lors de son utilisation il n'y ait pas de déplacement relatif du dispositif et du support d'échantillon.

8. Dispositif de test selon la revendication 7, dans lequel le dispositif de fixation se présente sous la forme d'un berceau.

9. Dispositif de test selon l'une quelconque des revendications précédentes, dans lequel l'unité de déplacement peut être utilisée pour générer un champ électromagnétique ou électrique pour déplacer un échantillon à tester.

10. Dispositif de test selon l'une quelconque des revendications précédentes, dans lequel l'unité de détection peut être utilisée pour détecter des caractéristiques électriques, optiques, magnétiques, de résonance, plasmodiques, et/ou acoustiques propres à l'échantillon à tester.

11. Dispositif de test selon l'une quelconque des revendications précédentes, comprenant une unité de détection d'identification pouvant être utilisée pour détecter un identifiant du support d'échantillon, l'unité de détection d'identification pouvant de préférence être utilisée pour détecter un identifiant supporté par le support d'échantillon.

12. Dispositif de test selon l'une quelconque des revendications précédentes comprenant des moyens de récupération pouvant être utilisés pour récupérer des données d'échantillon et/ou de test associées au support d'échantillon, les moyens de récupération pouvant de préférence être utilisés pour récupérer les données situées sur un dispositif sur le support d'échantillon

13. Dispositif de test selon l'une quelconque des revendications précédentes comprenant un dispositif de maintien pour maintenir un support d'échantillon, le dispositif de maintien comprenant de préférence une fente destinée à loger un support d'échantillon.

14. Combinaison d'un dispositif de test et d'un support d'échantillon, le dispositif de test pouvant être utilisé pour tester pour une ou plusieurs caractéristique(s) d'un échantillon supporté par le support d'échantillon ; la combinaison comprenant : un dispositif de maintien conçu pour maintenir le support d'échantillon de manière sensiblement inamovible dans une position relative prédéterminée ; une unité de contrôle ; une unité de déplacement pouvant être utilisée pour réaliser le déplacement d'un échantillon à tester à l'intérieur du support d'échantillon ; une unité de détection pouvant être utilisée pour détecter un ou plusieurs paramètre(s) relatif(s) au contenu ou aux caractéristiques de l'échantillon ; des moyens de diagnostic pouvant être utilisés pour déterminer un état de diagnostic sur la base du ou des paramètre(s) détecté(s) et une unité d'informations pouvant être utilisée pour fournir des informations relatives au diagnostic ; l'unité de déplacement et l'unité de détection comprenant des moyens de déplacement et de détection sans contact respectivement pour déplacer un échantillon et pour détecter ledit paramètre ou lesdits paramètres sans mise en contact avec l'échantillon ; le dispositif étant disposé de telle sorte que lors de son utilisation il n'y ait pas de déplacement relatif du dispositif et du support d'échantillon
